# FASCICULE DE BREVET EUROPEEN

(11) **EP 3 062 177 B1**
(45) Date de publication et mention de la délivrance du brevet: **26.12.2018**
(21) Numéro de dépôt: 16156749.0
(22) Date de dépôt: 22.02.2016
(51) Int. Cl.: G05B 15/02, G05B 19/042, H04L 12/28, G06F 3/0481

(54) **PROCÉDÉ DE CONFIGURATION ET DE COMMANDE D'UN DISPOSITIF DE COMMANDE D'UNE INSTALLATION DOMOTIQUE D'UN BÂTIMENT**
KONFIGURATIONS- UND STEUERVERFAHREN EINES STEUERGERÄTS EINER HEIMANLAGE EINES GEBÄUDES
METHOD FOR CONFIGURING AND CONTROLLING A DEVICE FOR CONTROLLING A HOME-AUTOMATION SYSTEM OF A BUILDING

(30) Priorité: 23.02.2015 FR 1551534
(43) Date de publication de la demande: 31.08.2016
(73) Titulaire: SOMFY ACTIVITES SA, 74300 Cluses (FR)
(72) Inventeur: DEVIS, Frédéric, 74330 EPAGNY (FR); DUCHENE, Isabelle, 74970 MARIGINER (FR); RETY, Claudia, 74300 SAINT SIGISMOND (FR); DANIS, Michael, 74000 ANNECY (FR); GUERIN, Vianney, 74250 FILLINGES (FR)
(74) Mandataire: Verriest, Philippe

(56) Documents cités:
- EP-A1- 2 196 879
- EP-A2- 2 362 368
- FR-A1- 2 882 843
- US-A1- 2010 317 332

## Description

La présente invention concerne un procédé de configuration d'un dispositif de commande d'une installation domotique d'un bâtiment, un procédé de commande d'un tel dispositif de commande configuré conformément au procédé de configuration précité, un dispositif de commande, ainsi qu'une installation domotique incorporant un tel dispositif de commande.

Il est connu d'utiliser des équipements domotiques, par exemple, des actionneurs agencés pour déplacer ou modifier le réglage d'un élément du bâtiment, comme un volet ou un dispositif d'éclairage ou encore un système d'alarme.

Une installation domotique peut également comprendre des capteurs d'une grandeur physique, telle qu'une température ou un degré de luminosité ou d'hygrométrie, ou encore un capteur de position d'un équipement domotique. Un actionneur peut également comprendre un capteur.

Il est connu du document EP 2 000 867 de procéder à la configuration d'un équipement domotique en définissant des positions ou des réglages des équipements domotiques destinés à constituer une consigne, lorsqu'un capteur associé à l'installation domotique détecte un événement climatique particulier, tel que le dépassement d'une vitesse de vent prédéterminée.

Un tel procédé de configuration permet de prévoir le déclenchement de commandes dans des situations spécifiques correspondant à des dépassements de seuils, la réalisation de la configuration devant être réalisée de façon différenciée pour chacun des équipements domotiques considérés. Ce procédé ne permet pas de façon simple de générer des configurations correspondant à un ensemble d'équipements domotiques dont la commande est disponible de façon intuitive à l'utilisateur.

Il est également connu du document EP2196879 ou du document FR2882843 de procéder à des enregistrements de configuration d'un équipement domotique en lien avec une case ou une icône. Il apparaît toutefois que la sélection ou l'association d'une icône ou d'une case ne constitue pas nécessairement une information intuitive pour un utilisateur. Par ailleurs, la configuration de l'équipement enregistrée peut ne pas correspondre à ce que l'utilisateur souhaitait réellement.

La présente invention a pour but de résoudre les inconvénients précités et de proposer un procédé de configuration d'un dispositif de commande d'une installation domotique, un procédé de commande en fonctionnement du dispositif de commande configuré conformément au procédé de configuration du dispositif de commande, un dispositif de commande associé et une installation domotique comprenant un tel dispositif de commande, permettant de simplifier la commande d'équipements domotiques.

A cet effet, la présente invention concerne un procédé de configuration selon la revendication 1.

Grâce aux dispositions selon l'invention, la mémorisation de données d'état d'un ou de plusieurs équipements domotiques correspondant à la définition d'un scénario est associée à une image, prise à un instant donné ou à une image sélectionnée à un instant donné.

L'image capturée ou sélectionnée peut notamment être une photographie.

L'association de l'image et du scénario permet de créer une illustration explicite d'un scénario qui peut, notamment, correspondre à une ambiance souhaitée. L'image constitue ainsi un élément d'identification du scénario pour l'utilisateur.

L'étape de capture ou de sélection d'une image et l'étape de mémorisation ou d'au moins une donnée d'état sont réalisées postérieurement à l'étape de réception d'une instruction de configuration. Ces deux étapes peuvent être réalisées l'une après l'autre, selon les deux ordres possibles, ou encore sont réalisées simultanément
L'étape de mémorisation peut comprendre l'émission d'un ordre de collecte de données d'état à destination des équipements domotiques sélectionnés, puis une mémorisation au cours de laquelle les données d'état peuvent être stockées soit au niveau de chaque équipement, soit au niveau d'une entité centrale d'une installation domotique, soit au niveau d'un serveur, soit encore au niveau d'un terminal. Ainsi, la mémorisation du point de vue d'un terminal peut correspondre à l'émission d'un ordre de mémorisation comprenant par exemple un identifiant d'ordre de mémorisation.

L'étape de configuration associe donc la photographie capturée ou l'image sélectionnée aux données d'état des équipements mémorisées lors de l'étape de mémorisation, de façon à ce que la mémorisation corresponde à l'instant de la capture ou de la sélection afin de faciliter l'identification du scenario par l'utilisateur.

Les étapes de mémorisation et de configuration sont donc simultanées. Elles se produisent notamment lorsqu'un utilisateur valide de façon simultanée l'image et la mémorisation des états des équipements. On entend ici par simultanément le fait que les deux étapes soient réalisées dans un intervalle de temps de quelques secondes, assimilable pour un utilisateur à une réalisation simultanée, ou en tout état de cause que les deux étapes soient enchainées de façon automatique dans un délai de quelques secondes.

Le mode de fonctionnement est simplifié par rapport à l'art antérieur. La mémorisation est réalisée en associant l'instant de capture ou de sélection de l'image à la configuration courante que l'utilisateur peut constater directement.

Ces dispositions permettent, en particulier, de déclencher un scénario en repérant et en sélectionnant l'image associée à l'élément de sélection et de réaliser ainsi une commande intuitive de l'installation domotique.

Selon un aspect de l'invention, l'instruction de configuration comprend une identification d'un élément de sélection. L'instruction de configuration peut, notamment, comprendre un appui sur une zone d'affichage d'un élément de sélection dans le cadre de l'utilisation d'un écran tactile comme dispositif d'entrée de données et dispositif d'affichage.

Selon un aspect de l'invention, l'étape de capture ou de sélection d'une image correspond à une prise d'une photographie ou à la sélection d'une photographie.

Selon un autre aspect de l'invention, l'étape de capture ou de sélection d'une image est réalisée par la sélection d'une image préalablement stockée dans le dispositif de commande.

L'étape de constitution d'une sélection peut être réalisée suite à l'étape de réception d'une instruction de configuration d'un scénario, suite à l'étape de capture ou de sélection d'une image ou suite à l'étape de mémorisation d'au moins une donnée d'état d'au moins un équipement domotique.

Selon un aspect de l'invention, l'étape de constitution d'une sélection est réalisée préalablement à l'étape de mémorisation d'au moins une donnée d'état d'au moins un équipement domotique. Ces dispositions permettent d'éviter le stockage de données d'état pour des équipements domotiques qui ne sont pas concernés par la commande de scénario.

Selon un aspect de l'invention, le dispositif de commande peut collecter, auprès desdits équipements domotiques ou auprès d'une entité centrale de l'installation domotique, une liste descriptive d'un ensemble d'équipements domotiques auquel peut être appliqué le scénario de commande, l'étape de constitution d'une sélection pouvant être, ensuite, opérée parmi ladite liste.

Selon un aspect de l'invention, le procédé de configuration comprend, en outre, l'étape suivante :
- Edition de l'image capturée ou sélectionnée.

Grâce à ces dispositions, un recadrage ou une modification de l'image capturée ou sélectionnée peut être réalisé, de façon à adapter l'image à son utilisation en tant qu'élément d'identification du scénario à déclencher.

Selon un aspect de l'invention, le procédé de configuration comprend une étape de modification de l'image I associée au scénario de commande pour la remplacer par un fichier image personnel ou une icône parmi une liste proposée, ladite icône évoquant un type d'ambiance.

Cette disposition permet un remplacement de l'image, ladite étape étant postérieure à l'étape de configuration de l'élément de sélection, lorsque l'utilisateur souhaite simplement remplacer l'image I associée au scénario sans modifier le scénario.

La présente invention concerne également un procédé de commande d'un dispositif de commande d'une installation domotique d'un bâtiment.

Selon l'invention, ledit procédé comprend au moins les étapes suivantes :
a) Détection d'une interaction d'un utilisateur avec un élément de sélection configuré selon un procédé de configuration défini précédemment, de façon à être associé à un scénario ; et
b) Exécution d'une commande du scénario associé avec ledit élément de sélection, de sorte que chaque équipement domotique associé au scénario atteigne l'état correspondant à l'au moins une donnée d'état mémorisée à l'étape de mémorisation.

La présente invention concerne également un produit programme d'ordinateur comprenant des instructions de code agencées pour mettre en oeuvre les étapes d'un procédé de configuration ou d'un procédé de commande tel que définis précédemment, lorsque ledit programme est exécuté par un processeur du dispositif de commande.

Selon un aspect de l'invention, le produit programme d'ordinateur est agencé sous forme d'application téléchargeable sur un terminal du dispositif de commande.

La présente invention concerne également un dispositif de commande d'une installation domotique, ledit dispositif de commande comprenant un dispositif d'entrée de données et un dispositif d'affichage, le dispositif d'affichage ayant un écran de représentation graphique.

Selon l'invention, ledit dispositif de commande comprend des éléments matériels et/ou logiciels de mise en oeuvre d'un procédé de configuration ou d'un procédé de commande tel que défini précédemment.

Selon un aspect de l'invention, le dispositif de commande comprend un terminal, en particulier un téléphone intelligent ou une tablette, ledit terminal comprenant le dispositif d'entrée de données et le dispositif d'affichage.

La présente invention concerne également une installation domotique d'un bâtiment comprenant une pluralité d'équipements domotiques, caractérisé en ce que ladite installation domotique comprend un dispositif de commande tel que défini précédemment.

De toute façon l'invention sera bien comprise à l'aide de la description qui suit en référence aux dessins schématiques annexés représentant, à titre d'exemple non limitatif, une forme d'exécution de ce procédé de configuration et de ce procédé de commande :
La figure 1 est une vue schématique d'un bâtiment et d'une installation domotique conforme à un mode de réalisation de l'invention ;
La figure 2 est un schéma présentant les liens fonctionnels entre les éléments de l'installation domotique illustrée à la figure 1, l'installation domotique comprenant, notamment, un serveur et un dispositif de commande ;
Les figures 3 à 8 sont des vues de face de l'interface de commande et/ou de contrôle, lors de l'exécution par une application téléchargeable d'un procédé de configuration du dispositif de commande de l'installation domotique du bâtiment illustré aux figures 1 et 2 ;
La figure 9 est un ordinogramme des étapes d'un procédé de configuration du dispositif de commande et, en particulier, de l'interface de commande et/ou de contrôle illustrés aux figures 1 à 8 ; et
La figure 10 est un ordinogramme des étapes d'un procédé de commande du dispositif de commande et, en particulier, de l'interface de commande et/ou de contrôle illustrés aux figures 1 à 8.

Dans la description détaillée qui va suivre des figures définies ci-dessus, les mêmes éléments ou les éléments remplissant des fonctions identiques pourront conserver les mêmes références de manière à simplifier la compréhension de l'invention.

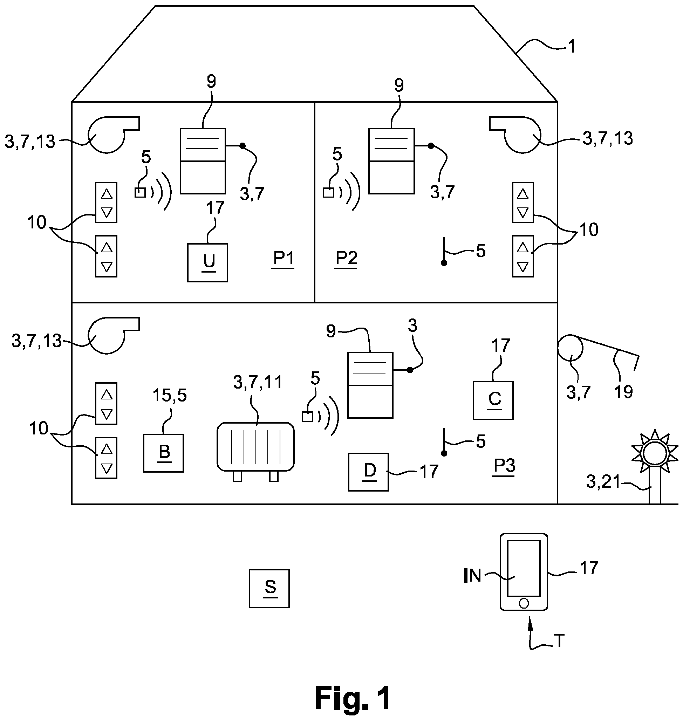

Comme illustré à la figure 1, un bâtiment 1 comprend trois pièces P1, P2, P3. Le bâtiment 1 comprend également des équipements domotiques 3 et des capteurs 5, chaque capteur 5 étant agencé pour mesurer une grandeur physique, par exemple une température ou un degré d'hygrométrie, ou agencé pour déterminer la position d'un élément du bâtiment 1, comme l'état d'ouverture d'un volet roulant 9.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être un capteur de température, un capteur d'ensoleillement ou un capteur d'humidité. Des capteurs 5 de position d'équipements domotiques 3 du bâtiment 1, comme, par exemple, des capteurs de position d'un ouvrant tel une fenêtre, motorisée ou non, peuvent également être prévus.

Un équipement domotique 3 et un capteur 5 sont ainsi à considérer comme des entités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Une installation domotique 17 est agencée pour regrouper l'ensemble des données en provenance des équipements domotiques 3 et pour traiter ces données.

L'installation domotique 17 comprend une entité centrale U agencée pour commander et/ou contrôler l'ensemble des équipements domotiques 3 à distance, notamment en utilisant un protocole de communication sans fil, par exemple un protocole de communication radio.

L'installation domotique 17 comprend, en outre, un terminal de communication mobile T pourvu d'une interface de commande et/ou de contrôle IN permettant d'afficher des informations ou des données comme détaillé plus loin.

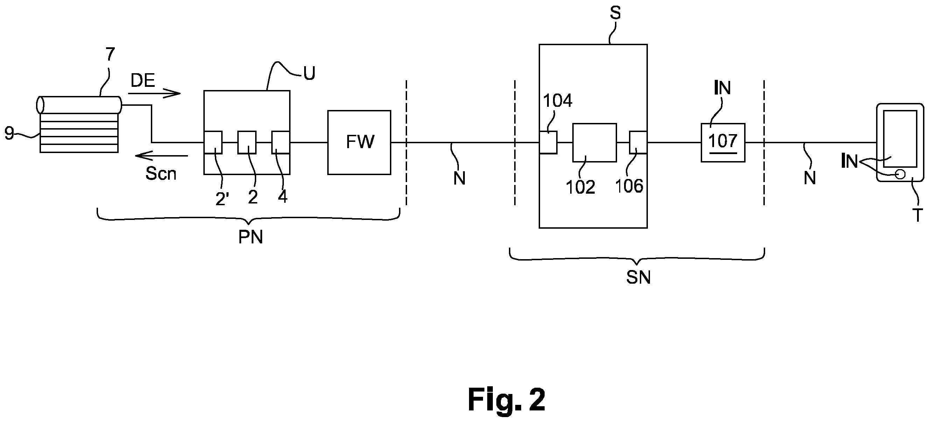

Comme cela est représenté sur la figure 2, l'entité centrale U est agencée pour communiquer avec un serveur S.

L'entité centrale U est disposée sur un réseau privé PN, dont l'accès est en général protégé par un pare-feu FW. Le serveur S est également disposé sur un réseau privé SN. Le réseau privé PN est relié à un réseau étendu N, par exemple Internet.

En particulier, l'entité centrale U de l'installation domotique 17 comprend une unité de traitement 2 agencée pour contenir et exécuter un premier programme d'ordinateur.

A titre d'exemple, l'unité de traitement 2 comprend un processeur, une mémoire flash de stockage ainsi d'un mémoire vive, et d'une puce Ethernet.

L'entité centrale U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21 ou un système d'alarme.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'autres actionneurs 7 ou d'éclairages 21, comme cela est précédemment décrit en référence à la figure 1.

La réception d'informations d'un capteur 5 fournissant des informations de présence d'un utilisateur ou des valeurs des paramètres environnants, comme la température, l'humidité et la luminosité, est également prévue. De la même façon, l'entité centrale U peut permettre le contrôle et/ou la commande d'un système d'alarme.

L'entité centrale U comprend, en outre, un module de communication 4 avec le serveur S. Le serveur S permet la commande et/ou le contrôle à distance et comprend une unité de traitement 102 agencée pour contenir et exécuter un deuxième programme d'ordinateur.

Le serveur S comprend, en outre, au moins une interface de communication 104 destinée à la communication avec l'entité centrale U.

Le serveur S peut comprendre également une interface de communication 106 destinée à la communication avec une interface de commande et/ou de contrôle IN.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

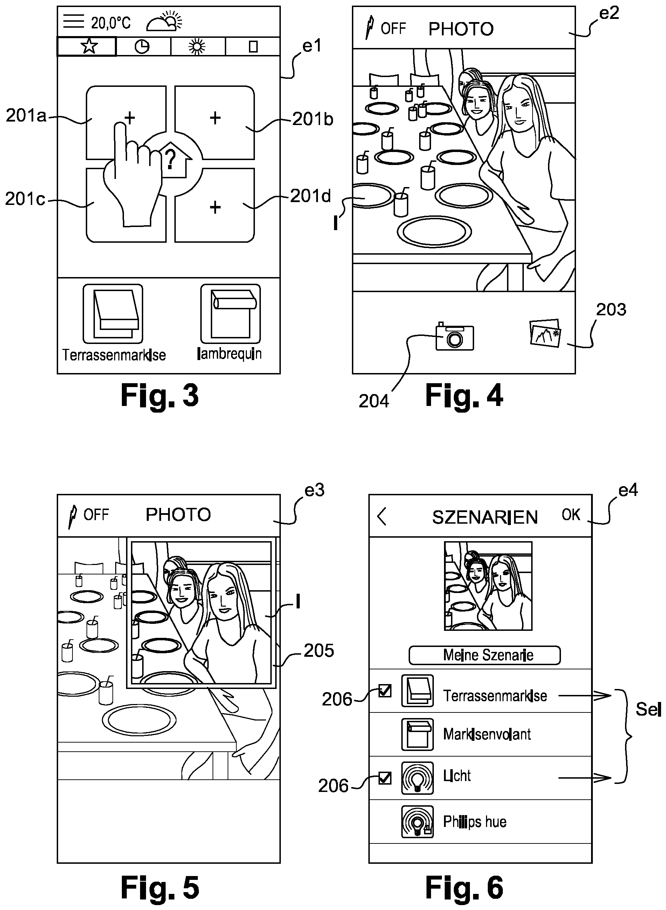

L'application téléchargeable présente un affichage au niveau de l'écran du terminal T, comme représenté aux figures 3 à 8. L'exécution de l'application téléchargeable sera présentée plus en détail ci-dessous selon les étapes d'un procédé de configuration et d'un procédé de commande de l'interface IN.

Il est à noter qu'il peut être prévu une ou plusieurs applications téléchargeables, l'utilisation de plusieurs applications permettant de prendre en compte des commandes de scénarios distincts correspondant à des parties du bâtiment ou à des thèmes distincts, comme par exemple : les équipements domotiques 3 associés à une terrasse, les équipements domotiques 3 associés aux ouvrants du bâtiment 1, tels que par exemple les volets roulants 9, les équipements domotiques 3 associés aux accès du bâtiment 1, tels que la porte de garage et l'alarme, ou à l'enceinte du bâtiment 1, tel que par exemple le portail.

Alternativement, une même application peut comprendre plusieurs écrans ou modules relatifs à différents thèmes ou différentes parties du bâtiment 1.

Un exemple de mise en oeuvre d'un procédé de configuration du dispositif de commande de l'installation domotique 17 va à présent être décrit en référence aux figures 3 à 8, qui illustrent les différents écrans d'affichage de l'application téléchargeable présente sur le terminal T d'un utilisateur.

Comme cela est décrit sur la figure 3, l'application présente un premier affichage d'écran e1 sur lequel des éléments de sélection 201a, 201b, 201c, 201d, notamment des zones sensitives d'un écran tactile, peuvent être configurés et associés à un scénario de commande. Sur la figure 3, étant donné qu'aucun de ces éléments de sélection n'a pas été associé, préalablement, à un scénario de commande, des symboles « + » sont affichés.

En réponse à une interaction de l'utilisateur sur l'un de ces éléments de sélection 201a, 201b, 201c, 201d, qui est interprétée comme une instruction de configuration de cet élément de sélection, la configuration d'un nouveau scénario est initiée dans une étape initiale Ecf0. A titre d'exemple, la configuration d'un nouveau scénario attaché au bouton 201a est considérée ci-après.

Dans une étape ultérieure Ecf1, un second affichage d'écran e2 est utilisé offrant la possibilité de capturer une photographie en utilisant un élément de sélection 204, par exemple, en utilisant la cellule photographique d'un téléphone portable ou d'une tablette utilisé comme terminal T. Alternativement, il est proposé de sélectionner une image préexistante en cliquant ou touchant sur un élément de sélection dédié 203. Dans l'exemple illustré à la figure 4, l'image I correspond à la capture d'une photographie.

Dans une étape optionnelle Ecf2, une édition de l'image I est possible comme cela est représenté sur un troisième affichage d'écran e3 de la figure 5, afin, notamment, de permettre un recadrage d'une photographie dans un contour 205.

Une fois l'image I capturée ou sélectionnée, une étape Ecf3 de constitution d'une sélection Sel d'au moins un équipement domotique 3 parmi une pluralité d'équipements domotiques 3 appartenant à l'installation domotique 17 est réalisée, comme cela est visible sur la figure 6 représentant un quatrième affichage d'écran e4. A cette fin, le terminal T peut collecter, auprès de l'entité centrale U, une liste descriptive d'un ensemble d'équipements 3 auquel peut être appliqué le scénario de commande. Cette étape Ecf3 permet à un utilisateur de sélectionner ou de désélectionner des équipements domotiques 3 auxquels doivent s'appliquer une mémorisation de l'état en cochant, par exemple, des cases 206. A titre d'exemple, sur la figure 6, l'utilisateur a choisi d'appliquer le scénario Scn à un store de terrasse 19 et à un éclairage extérieur 21.

Par la suite, une étape de mémorisation Ecf4 d'un ensemble de données d'état DE correspondant à la sélection d'équipements Sel choisie par l'utilisateur est réalisée. Cette étape Ecf4 de mémorisation peut consister en un ordre de collecte de données d'état DE à destination des d'équipements domotiques 3 sélectionnés, puis en une mémorisation au cours de laquelle les données d'état peuvent être stockées soit au niveau de chaque équipement domotique 3, soit au niveau de l'entité centrale U de l'installation domotique 1, soit au niveau du serveur S, ou encore au niveau du terminal T. Ainsi, la mémorisation du point de vue du terminal T peut correspondre à l'émission d'un ordre de mémorisation comprenant, par exemple, un identifiant de scénario.

Une étape Ecf5 de configuration d'un élément de sélection 201a, 201b, 201c, 201d du dispositif d'entrée de données est réalisée en fonction de l'image I capturée ou sélectionnée et des données d'état DE des équipements domotiques 3 mémorisées.

L'étape de configuration Ecf5 associe donc la photographie capturée ou l'image I sélectionnée aux données d'état DE de la sélection Sel des équipements, mémorisées lors de l'étape de mémorisation. De cette façon, la mémorisation correspond à l'instant de la capture ou de la sélection afin de faciliter l'identification du scenario par l'utilisateur.

Les étapes de mémorisation Ecf4 et de configuration Ecf5 sont donc simultanées. Elles se produisent notamment lorsqu'un utilisateur valide de façon simultanée l'image et la mémorisation des états de la sélection Sel des équipements. L'étape de configuration Ecf5 a lieu lorsque l'utilisateur utilise un bouton de validation OK, visible notamment en haut à droite de l'écran en figure 6.

Ainsi, l'élément de sélection 201a est configuré de façon à déclencher, en réponse à une interaction d'un utilisateur, l'émission d'au moins une commande de scénario à destination des équipements domotiques 3, de façon à ce que chaque équipement 3 appartenant à la sélection Sel atteigne l'état correspondant aux données d'état DE mémorisées.

Comme cela est visible sur la figure 6, l'étape de configuration Ecf5 comprend également une configuration de l'affichage de l'élément de sélection 201a, de façon à ce que celui-ci corresponde à l'affichage de l'image I sur le deuxième écran e2 ou le troisième écran e3.

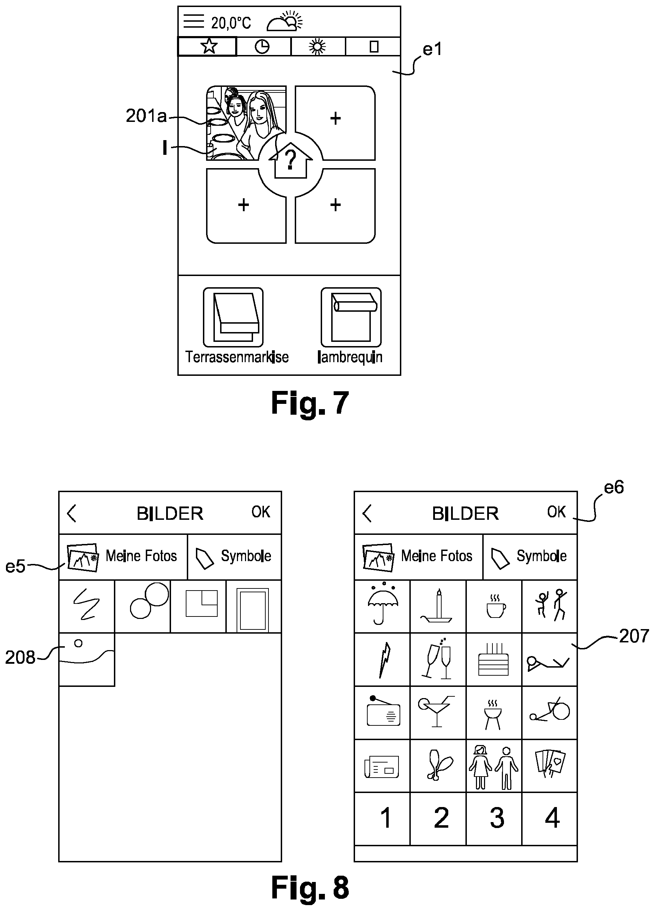

Dans une étape ultérieure optionnelle Ecf6, il est possible de modifier l'image I associée au scénario de commande pour la remplacer par un fichier image personnel 208 en utilisant un cinquième affichage d'écran e5, comme cela est représenté sur la figure 8. Alternativement, il est proposé de sélectionner une icône 207 parmi une liste proposée par l'application sur un sixième affichage d'écran e6, ladite icône 207 pouvant, par exemple, évoquer un type d'ambiance.

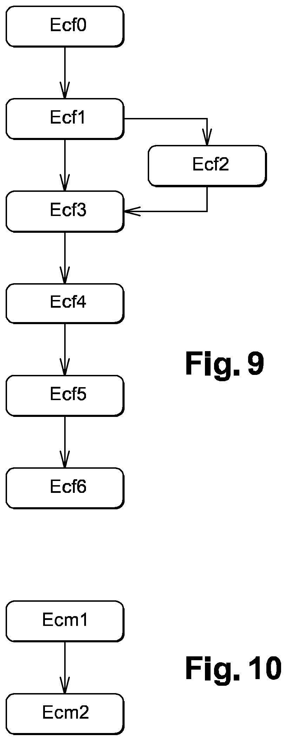

La mise en oeuvre d'un procédé de commande du dispositif de commande de l'installation domotique 17 du bâtiment 1 va être à présent décrite en référence à la figure 10.

Ce procédé de commande comprend une première étape ECm1 de sélection d'un scénario configuré par le procédé de configuration précédemment décrit, cette sélection pouvant être réalisée simplement en touchant l'élément de sélection 201a correspondant représenté sur le premier affichage d'écran e1 illustré sur la figure 7, qui est affiché sous forme de l'image I.

L'exécution du scénario sélectionné est ensuite déclenché dans une seconde étape ECm2, de sorte que chaque équipement domotique 3 associé au scénario sélectionné atteigne l'état correspondant à l'au moins une donnée d'état DE mémorisée.

La commande du scénario Scn peut correspondre à un envoi d'un ordre depuis le terminal T à destination du serveur S, de l'entité centrale U ou de chacun des équipements domotiques 3, l'ordre contenant, par exemple, un identifiant de scénario, le serveur S, l'entité centrale U ou chaque équipement domotique 3, et étant agencé pour mettre en oeuvre le scénario en fonction des données d'état DE mémorisées lors du procédé de configuration en associant avec l'identifiant de scénario Scn.

A titre d'exemple, le procédé de configuration et le procédé de commande peuvent être adaptés à la définition d'un scénario Scn pour une sélection d'équipements domotiques 3 associés à une terrasse. Ainsi, une photographie peut être prise à un premier instant donné et associée avec une configuration donnée d'une sélection Sel d'équipements domotiques 3 associés à la terrasse. L'utilisateur souhaitant ultérieurement retrouver la configuration d'état des équipements domotiques 3 correspondant au premier instant symbolisé par l'image I peut simplement appuyer sur l'élément de sélection associé 201a pour commander un scénario Scn permettant de retrouver ladite configuration souhaitée d'état des équipements domotiques 3.

Comme il va de soi, l'invention ne se limite pas à la seule forme d'exécution de ce procédé de configuration, du procédé de commande et des dispositifs décrits ci-dessus à titre d'exemple, elle en embrasse au contraire toutes les variantes de réalisation.

## Revendications

1. Procédé de configuration d'un dispositif de commande d'une installation domotique (17) d'un bâtiment (1), l'installation domotique (17) comprenant une pluralité d'équipements domotiques (3), le dispositif de commande comprenant un dispositif d'entrée de données et un dispositif d'affichage, le dispositif d'affichage ayant un écran de représentation graphique, le dispositif de commande étant configuré pour contrôler le fonctionnement des équipements domotiques (3), **caractérisé en ce que** ledit procédé comprend au moins les étapes suivantes :
a) Initiation (Ecf0) de la configuration d'un nouveau scénario (Scn) de commande en réponse à une interaction de l'utilisateur sur un élément de sélection (201a, 201b, 201c, 201d) du dispositif d'entrée de données, ;
b) Capture ou sélection (Ecf1) d'une image (I) par le dispositif de commande à un premier instant donné;
c) Constitution (Ecf3) d'une sélection (Sel) d'au moins un équipement domotique (3) parmi une pluralité d'équipements domotiques (3) auquel le scénario (Scn) doit être appliqué ;
d) Mémorisation (Ecf4) d'au moins une donnée d'état (DE) correspondant à l'au moins un équipement domotique sélectionné (Sel) et configuration (Ecf5) de l'élément de sélection (201a, 201b, 201c, 201d) du dispositif d'entrée de données, la configuration associant l'image (I) capturée ou sélectionnée à l'au moins une donnée d'état (DE) du ou des équipements domotiques de la sélection (Sel)
e) Déclenchement, en réponse à une interaction d'un utilisateur avec ledit élément de sélection (201a, 201b, 201c, 201d), de l'émission d'au moins une commande du scénario (Scn) à destination du ou des équipement domotique (3) sélectionnés, de façon à ce que ce ou ces équipements domotiques atteignent l'état correspondant à l'au moins une donnée d'état (DE) mémorisée.

2. Procédé de configuration selon l'une quelconque des revendications précédentes, **caractérisé en ce que** l'étape de capture ou de sélection (Ecf1) d'une image (I) correspond à une prise d'une photographie ou à la sélection d'une photographie.

3. Procédé de configuration selon l'une quelconque des revendications précédentes, **caractérisé en ce que** l'étape de capture ou de sélection (Ecf1) d'une image (I) est réalisée par la sélection d'une image préalablement stockée dans le dispositif de commande.

4. Procédé de configuration selon l'une quelconque des revendications précédentes, **caractérisé en ce que** ledit procédé comprend, en outre, l'étape suivante :
- (Ecf2) Edition de l'image (I) capturée ou sélectionnée.

5. Procédé de configuration selon l'une quelconque des revendications précédentes, **caractérisé en ce que** ledit procédé comprend, en outre, l'étape suivante :
- (Ecf6) Modification de l'image (I) associée au scénario (Scn) de commande pour la remplacer par un fichier image personnel (208) ou une icône (207) parmi une liste proposée, ladite icône (207) évoquant un type d'ambiance.

6. Procédé de commande d'un dispositif de commande d'une installation domotique (17) d'un bâtiment (1), **caractérisé en ce que** ledit procédé comprend au moins les étapes suivantes :
(Ecm1) détection d'une interaction d'un utilisateur avec un élément de sélection (201a, 201b, 201c, 201d) configuré selon un procédé de configuration dudit dispositif de commande conforme à l'une quelconque des revendications 1 à 5, de façon à être associé à un scénario (Scn) ; et
(Ecm2) exécution d'une commande du scénario (Scn) associé avec ledit élément de sélection (201a, 201b, 201c, 201d), de sorte que chaque équipement domotique (3) associé au scénario (Scn) atteigne l'état correspondant à l'au moins une donnée d'état (DE) mémorisée à l'étape de mémorisation (Ecf4).

7. Produit programme d'ordinateur comprenant des instructions de code agencées pour mettre en oeuvre les étapes d'un procédé de configuration selon l'une quelconque des revendications 1 à 5 ou d'un procédé de commande selon la revendication 6, lorsque ledit programme est exécuté par un processeur du dispositif de commande.

8. Produit programme d'ordinateur selon la revendication précédente agencé sous forme d'application téléchargeable sur un terminal du dispositif de commande.

9. Dispositif de commande d'une installation domotique (17), ledit dispositif de commande comprenant un dispositif d'entrée de données et un dispositif d'affichage, le dispositif d'affichage ayant un écran de représentation graphique, **caractérisé en ce que** ledit dispositif de commande comprend des éléments matériels et/ou logiciels de mise en oeuvre d'un procédé de configuration conforme à l'une quelconque des revendications 1 à 5 ou d'un procédé de commande conforme à la revendication 6.

10. Dispositif de commande selon la revendication précédente, **caractérisée en ce que** ledit dispositif de commande comprend un terminal, en particulier un téléphone intelligent ou une tablette, ledit terminal comprenant le dispositif d'entrée de données et le dispositif d'affichage.

11. Installation domotique (17) d'un bâtiment comprenant une pluralité d'équipements domotiques (3), **caractérisé en ce que** ladite installation domotique (17) comprend un dispositif de commande conforme à l'une quelconque des revendications 9 ou 10.

## Patentansprüche

1. Verfahren zum Konfigurieren einer Steuerungsvorrichtung einer Gebäudetechnik-Installation (17) eines Gebäudes (1), wobei die Gebäudetechnik-Installation (17) eine Vielzahl von Gebäudetechnik-Ausrüstungen (3) umfasst, wobei die Steuerungsvorrichtung eine Dateneingangsvorrichtung und eine Anzeigevorrichtung umfasst, wobei die Anzeigevorrichtung einen Bildschirm zur grafischen Darstellung aufweist, wobei die Steuerungsvorrichtung konfiguriert ist, um den Betrieb der Gebäudetechnik-Ausrüstungen (3) zu kontrollieren, **dadurch gekennzeichnet, dass** das Verfahren mindestens die folgenden Schritte umfasst:
a) Initiieren (Ecf0) der Konfiguration eines neuen Steuerungsszenarios (Scn) als Reaktion auf eine Interaktion des Nutzers an einem Auswahlelement (201a, 201b, 201c, 201d) der Dateneingangsvorrichtung;
b) Aufzeichnen oder Auswählen (Ecf1) eines Bildes (I) durch die Steuerungsvorrichtung zu einem ersten gegebenen Zeitpunkt;
c) Erstellen (Ecf3) einer Auswahl (Sel) mindestens einer Gebäudetechnik-Ausrüstung (3) aus einer Vielzahl von Gebäudetechnik-Ausrüstungen (3), auf die das Szenario (Scn) angewendet werden soll;
d) Speichern (Ecf4) mindestens eines Zustandsdatums (DE) entsprechend der mindestens einen ausgewählten Gebäudetechnik-Ausrüstung (Sel) und Konfigurieren (Ecf5) des Auswahlelements (201a, 201b, 201c, 201d) der Dateneingangsvorrichtung, wobei die Konfiguration das aufgezeichnete oder ausgewählte Bild (I) dem mindestens einen Zustandsdatum (DE) der Gebäudetechnik-Ausrüstung(en) der Auswahl (Sel) zuordnet
e) Auslösen, als Reaktion auf eine Interaktion eines Nutzers mit dem Auswahlelement (201a, 201b, 201c, 201d), der Sendung mindestens einer Steuerung des Szenarios (Scn) zu der oder den ausgewählten Gebäudetechnik-Ausrüstungen (3), sodass diese Gebäudetechnik-Ausrüstung(en) den Zustand erreichen, der dem mindestens einen gespeicherten Zustandsdatum (DE) entspricht.

2. Verfahren zum Konfigurieren nach einem der vorstehenden Ansprüche, **dadurch gekennzeichnet, dass** der Schritt des Aufzeichnens oder Auswählens (Ecf1) eines Bildes (I) einem Aufnehmen eines Fotos oder dem Auswählen eines Fotos entspricht.

3. Verfahren zum Konfigurieren nach einem der vorstehenden Ansprüche, **dadurch gekennzeichnet, dass** der Schritt des Aufzeichnens oder Auswählens (Ecf1) eines Bildes (I) durch das Auswählen eines zuvor in der Steuerungsvorrichtung abgelegten Bildes durchgeführt wird.

4. Verfahren zum Konfigurieren nach einem der vorstehenden Ansprüche, **dadurch gekennzeichnet, dass** das Verfahren weiter den folgenden Schritt umfasst:
- (Ecf2) Editieren des aufgezeichneten oder ausgewählten Bildes (I).

5. Verfahren zum Konfigurieren nach einem der vorstehenden Ansprüche, **dadurch gekennzeichnet, dass** das Verfahren weiter den folgenden Schritt umfasst:
- (Ecf6) Ändern des dem Steuerungsszenario (Scn) zugeordneten Bildes (I), um es durch eine persönliche Bilddatei (208) oder ein Symbol (207) aus einer angebotenen Liste zu ersetzen, wobei das Symbol (207) einen Umgebungstyp zum Ausdruck bringt.

6. Verfahren zum Steuern einer Steuerungsvorrichtung einer Gebäudetechnik-Installation (17) eines Gebäudes (1), **dadurch gekennzeichnet, dass** das Verfahren mindestens die folgenden Schritte umfasst:
(Ecm1) Erfassen einer Interaktion eines Nutzers mit einem Auswahlelement (201a, 201b, 201c, 201d), das entsprechend einem Verfahren zum Konfigurieren der Steuerungsvorrichtung nach einem der Ansprüche 1 bis 5 konfiguriert ist, um einem Szenario (Scn) zugeordnet zu werden; und
(Ecm2) Ausführen einer Steuerung des dem Auswahlelement (201a, 201b, 201c, 201d) zugeordneten Szenarios (Scn), sodass jede dem Szenario (Scn) zugeordnete Gebäudetechnik-Ausrüstung (3) den Zustand erreicht, der dem mindestens einen in dem Speicherungsschritt (Ecf4) gespeicherten Zustandsdatum (DE) entspricht.

7. Computerprogrammprodukt, Codeinstruktionen umfassend, die angeordnet sind, um die Schritte eines Verfahrens zum Konfigurieren nach einem der Ansprüche 1 bis 5 oder eines Verfahrens zum Steuern nach Anspruch 6 umzusetzen, wenn das Programm durch einen Prozessor der Steuerungsvorrichtung ausgeführt wird.

8. Computerprogrammprodukt nach dem vorstehenden Anspruch, das in Form einer Applikation angeordnet ist, die auf ein Endgerät der Steuerungsvorrichtung heruntergeladen werden kann.

9. Steuerungsvorrichtung einer Gebäudetechnik-Installation (17), wobei die Steuerungsvorrichtung eine Dateneingangsvorrichtung und eine Anzeigevorrichtung umfasst, wobei die Anzeigevorrichtung einen Bildschirm zur grafischen Darstellung aufweist, **dadurch gekennzeichnet, dass** die Steuerungsvorrichtung Hardware- und/ oder Software-Elemente zum Umsetzen eines Verfahrens zum Konfigurieren nach einem der Ansprüche 1 bis 5 oder eines Verfahrens zum Steuern nach Anspruch 6 umfasst.

10. Steuerungsvorrichtung nach dem vorstehenden Anspruch, **dadurch gekennzeichnet, dass** die Steuerungsvorrichtung ein Endgerät, im Speziellen ein Smartphone oder ein Tablet umfasst, wobei das Endgerät die Dateneingangsvorrichtung und die Anzeigevorrichtung umfasst.

11. Gebäudetechnik-Installation (17) eines Gebäudes, eine Vielzahl von Gebäudetechnik-Ausrüstungen (3) umfassend, **dadurch gekennzeichnet, dass** die Gebäudetechnik-Installation (17) eine Steuerungsvorrichtung nach einem der Ansprüche 9 oder 10 umfasst.

## Claims

1. A method for configuring a control device of a home automation installation (17) of a building (1), the home automation installation (17) comprising a plurality of home automation equipment (3), the control device comprising a data input device and a display device, the display device having a graphic representation screen, the control device being configured to monitor the operation of the home automation equipment (3), **characterized in that** said method comprises at least the following steps:
a) initiating (Ecf0) the configuration of a new control scenario (Scn) in response to a user interaction on a selection element (201a, 201b, 201c, 201d) of the data input device,;
b) Capturing or selecting (Ecf1) an image (I) by the control device at a first given moment;
c) constituting (Ecf3) a selection (Sel) of at least one home automation equipment (3) among a plurality of home automation equipment (3) to which the scenario (Scn) must be applied;
d) Storing (Ecf4) at least one state data (DE) corresponding to the at least one selected home automation equipment (Sel) and configuring (Ecf5) the selection element (201a, 201b, 201c, 201d) of the data input device, the configuration associating the captured or selected image (I) with the at least one state data (DE) of the home automation equipment of the selection (Sel)
e) Triggering, in response to a user interaction with said selection element (201a, 201b, 201c, 201d), the transmission of at least one scenario (Scn) control to the selected home automation equipment (3), so that this home automation equipment reaches the state corresponding to the at least one stored state data (DE).

2. The configuration method according to any one of the preceding claims, **characterized in that** the step of capturing or selecting (Ecf1) an image (I) corresponds to taking a photograph or selecting a photograph.

3. The configuration method according to any one of the preceding claims, **characterized in that** the step of capturing or selecting (Ecf1) an image (I) is performed by selecting an image previously stored in the control device.

4. The configuration method according to any one of the preceding claims, **characterized in that** said method further comprises the following step:
- (Ecf2) Editing the captured or selected image (I).

5. The configuration method according to any one of the preceding claims, **characterized in that** said method further comprises the following step:
- (Ecf6) changing the image (I) associated with the control scenario (Scn) to replace it with a personal image file (208) or an icon (207) among a proposed list, said icon (207) evoking a type of atmosphere.

6. A method for controlling a control device of a home automation installation (17) of a building (1), **characterized in that** said method comprises at least the following steps:
(Ecm1) detecting an interaction of a user with a selection element (201a, 201b, 201c, 201d) configured according to a method for configuring said control device in accordance with any one of claims 1 to 5, so as to be associated with a scenario (Scn); and
(Ecm2) executing a scenario (Scn) control associated with said selection element (201a, 201b, 201c, 201d), so that each home automation equipment (3) associated with the scenario (Scn) reaches the state corresponding to at least one state data (DE) stored in the storing step (Ecf4).

7. A computer program product comprising code instructions arranged to implement the steps of a configuration method according to any one of claims 1 to 5 or of a control method according to claim 6, when said program is executed by a processor of the control device.

8. The computer program product according to the preceding claim arranged as a downloadable application on a terminal of the control device.

9. A device for controlling a home automation installation (17), said control device comprising a data input device and a display device, the display device having a graphic representation screen, **characterized in that** said control device comprises hardware and/or software elements for implementing a configuration method in accordance with any one of claims 1 to 5 or a control method in accordance with claim 6.

10. The control device according to the preceding claim, **characterized in that** said control device comprises a terminal, particularly a smart phone or a tablet, said terminal comprising the data input device and the display device.

11. A home automation installation (17) of a building comprising a plurality of home automation equipment (3), **characterized in that** said home automation installation (17) comprises a control device in accordance with any one of claims 9 or 10.
